# FASCICULE DE BREVET EUROPEEN

(11) **EP 1 870 764 B1**
(45) Date de publication et mention de la délivrance du brevet: **03.02.2010**
(21) Numéro de dépôt: 07301110.8
(22) Date de dépôt: 14.06.2007
(51) Int. Cl.: G02B 27/22, H04N 7/14

(54) **Système optique alternant une capture d'image et une projection d'image**
Optisches System zum Wechsel zwischen der Aufzeichnung einer Abbildung und der Projektion einer Abbildung
Optical system alternating image capture and image projection

(30) Priorité: 20.06.2006 FR 0652543
(43) Date de publication de la demande: 26.12.2007
(73) Titulaire: FRANCE TELECOM, 75015 Paris (FR)
(72) Inventeur: Boute, Olivier, 75015, PARIS (FR); Gachignard, Olivier, 92120, MONTROUGE (FR)
(74) Mandataire: Lapoux, Roland

(56) Documents cités:
- WO-A-00/65844
- US-A- 6 104 424
- US-A1- 2001 055 152
- US-A1- 2005 111 101

## Description

La présente invention concerne un système optique alternant une capture d'image d'une scène locale dans lequel est situé le système optique et une projection d'une image aérienne par réflexion dans le système optique, pour des applications en temps réel telles que la visioconférence, le multimédia ou la réalité virtuelle.

Une image aérienne est perçue dans un plan stable et unique de l'espace. Lorsqu'elle est perçue dans cet espace, l'image aérienne restitue intégralement et en haute définition une image d'un objet, par l'intermédiaire d'un système optique. En optique géométrique, une image aérienne est une image réelle qui n'est pas formée sur un écran.

Dans l'état de la technique, des installations de communication reliant deux systèmes optiques utilisent la génération d'images aériennes par réflexion, afin de produire un effet stéréoscopique provenant de la perception par un observateur de deux images superposées sur deux plans de l'espace par l'intermédiaire d'une lame semi-réfléchissante. La lame semi-réfléchissante permet à une caméra de capturer une image dans la direction de l'observateur, et permet également à l'observateur de visualiser une image par réflexion dans cette même direction. Une telle installation de communication est décrite dans la demande de brevet internationale WO 01/11880.

Ces installations de communication font appel à une notion de "poste client" destiné à un groupe de personnes et une notion de "poste opérateur" individuel pour réaliser une extraction de l'image d'un objet dans des conditions particulières de prise de vue. Généralement un fond monochrome derrière l'objet facilite l'extraction de l'image de l'objet depuis le poste opérateur et l'image de l'objet extraite est transmise au poste client qui affiche une image aérienne de l'objet visualisée pour le groupe de personnes. Une image capturée par le poste client est transmise au poste opérateur qui affiche seulement l'image capturée et non l'image de l'objet extraite. La caméra est disposée entre la lame semi-réfléchissante et le fond de scène. La caméra n'est donc pas cachée par un quelconque dispositif et reste toujours visible par l'observateur.

Ces installations de communication sont donc dissymétriques puisque les fonctionnalités du poste client et du poste opérateur sont différentes.

Par ailleurs, chaque système optique est volumineux et nécessite un emplacement spacieux pour être installé.

Le brevet US 6 104 424 décrit un dispositif de visioconférence permettant un effet de contact les yeux dans les yeux entre deux conférenciers. Ce dispositif comprend un écran LCD à obturateur devant une zone d'observation pour former une image à partir d'un faisceau de projection qui a été émis depuis un écran d'affichage d'un ordinateur portable, amplifié par un système optique avant, puis réfléchi sur un miroir et un séparateur de faisceau. Une caméra est placée derrière le séparateur de faisceau. La position de l'écran LCD à obturateur devant l'observateur rend visible la caméra et empêche l'utilisation d'un deuxième dispositif d'affichage pour afficher une image de fond.

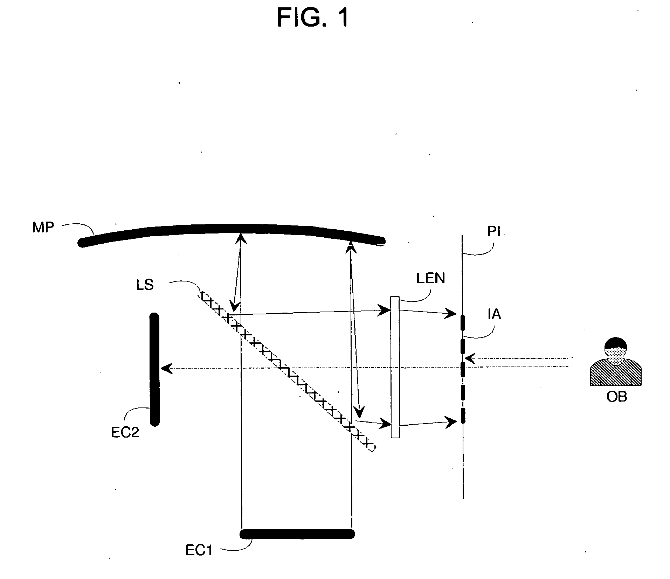

Un système optique de génération d'image aérienne par réflexion est illustré à la figure 1. Le système comprend un miroir parabolique MP, un premier écran EC1, par exemple de type écran à tube cathodique, et une lame semi-réfléchissante LS destinée à renvoyer une image d'un objet provenant du premier écran EC1 à un plan PI de l'espace, dans la direction d'un observateur OB, par l'intermédiaire d'une lentille LEN. La lentille est destinée à faire converger un faisceau lumineux provenant du premier écran EC1 pour former une image aérienne IA en haute définition au plan PI de l'espace. Un tel système optique est montré dans la demande de brevet WO 00/65844 et comprend une source d'image primaire à la place du premier écran, et une plaque quart d'onde et un polarisateur linéaire pour éliminer sensiblement des images fantômes causées par des sources lumineuses externes au niveau de la zone d'observation.

L'effet de flottement de l'image aérienne IA perçu au plan PI par l'observateur OB est accentué par l'affichage d'une deuxième image représentant un fond de scène sur un deuxième écran EC2 situé en arrière plan.

Un tel système optique ne prévoit pas de capture d'image de l'observateur et ne peut donc pas être utilisé pour des applications en temps réel telles que la visioconférence.

Pour remédier aux inconvénients précités, un système optique selon l'invention comprenant un premier dispositif de capture d'image pour capturer une image d'une zone d'observation, un premier dispositif d'affichage, une lame semi-réfléchissante, un miroir concave disposé face au premier dispositif d'affichage et un deuxième dispositif d'affichage pour afficher une image de fond, un faisceau lumineux étant diffusé par le premier dispositif d'affichage à travers la lame semi-réfléchissante, puis réfléchi sur le miroir et la lame semi-réfléchissante afin d'afficher une image aérienne entre la lame semi-réfléchissante et la zone d'observation, est **caractérisé en ce que** le système comprend
un projecteur apte à projeter un faisceau lumineux vers le premier dispositif d'affichage, le premier dispositif de capture d'image étant situé derrière le premier dispositif d'affichage à proximité d'un foyer du miroir concave et apte à capturer l'image de la zone d'observation à travers le premier dispositif d'affichage et formant avec le miroir et la lame semi-réfléchissante un ensemble optique télécentrique dont le champ de vision est cylindrique en direction de l'image aérienne et de la zone d'observation, et
un moyen pour alterner la capture de l'image de la zone d'observation par le premier dispositif de capture d'image et la projection du faisceau lumineux par le projecteur.

La position du premier dispositif de capture d'image derrière le premier dispositif d'affichage confère un caractère compact et modulaire au système optique qui peut alors être installé sans contraintes rédhibitoires de volume.

Par ailleurs, l'image aérienne projetée apparaît entre la lame semi-réfléchissante et la zone d'observation dans un plan de l'espace parallèle au plan de l'image de fond affichée sur le deuxième dispositif d'affichage. La superposition des images projetée et affichée crée un effet de perspective.

Le moyen pour alterner alterne suffisamment rapidement la capture et l'affichage d'image pour que l'oeil d'un observateur dans la zone d'observation observe des images de manière continue.

Grâce au moyen pour alterner, des premier et deuxième systèmes optiques conformes à l'invention peuvent communiquer afin qu'un observateur devant le premier système observe une image aérienne d'un observateur devant le deuxième système et réciproquement, par exemple au cours d'un échange d'image en temps réel pendant une visioconférence.

Un faisceau lumineux de forme cylindrique en provenance de la zone d'observation est réfléchi successivement sur la lame semi-réfléchissante puis sur le miroir concave pour converger sous forme conique au foyer du miroir concave où est situé le premier dispositif de capture d'image. Ce dernier a un champ de vision conique qui est centré sur le foyer du miroir concave et qui correspond au faisceau lumineux de forme conique convergeant au foyer. Par conséquent, le miroir concave confère un champ de vision cylindrique au premier dispositif de capture d'image en réfléchissant le faisceau lumineux de forme cylindrique en un faisceau lumineux de forme conique.

Par ailleurs, un système optique est dit "télécentrique" lorsqu'il fait apparaître les images d'objets en grandeur constante indépendamment de leur distance par rapport au système optique, ce qui élimine toute distorsion de la perspective des images autour du centre du champ de vision du système optique; En particulier, un système optique télécentrique a un champ de vision cylindrique afin que la grandeur des objets observés soit constante indépendamment de leur distance par rapport au système optique.

L'emplacement du premier dispositif de capture d'image à proximité d'un foyer du miroir concave autorise une prise de vue télécentrique de la zone d'observation. Le premier dispositif de capture d'image capture alors une image nette quel que soit l'éloignement de la zone d'observation puisque le champ de vision du dispositif est cylindrique.

Selon une autre caractéristique de l'invention, le système optique comprend en outre un deuxième dispositif de capture d'image situé derrière le deuxième dispositif d'affichage.

Le premier dispositif de capture d'image situé à proximité d'un foyer du miroir concave a un champ de vision cylindrique autorisant une prise de vue télécentrique de la zone d'observation tandis que le deuxième dispositif de capture d'image capture une image de la zone d'observation superposée à l'image aérienne projetée selon un champ de vision conique afin de localiser globalement la position de la zone d'observation.

Le moyen pour alterner peut commander alternativement le projecteur et alternativement l'un des dispositifs d'affichage. Le moyen pour alterner commande alors l'un des dispositifs d'affichage à un état opaque et la projection du faisceau lumineux par le projecteur sur ledit un dispositif d'affichage, et commande ledit un dispositif d'affichage à un état transparent et la suppression du faisceau lumineux.

Selon une autre réalisation de l'invention, le système optique comprend un obturateur, par exemple rotatif, commandé par le moyen pour alterner. L'obturateur comprend au moins une partie ajourée qui est traversée par le faisceau lumineux projeté par le projecteur vers l'un des premier et deuxième dispositifs d'affichage pour afficher l'une des images aérienne et de fond, et au moins une partie pleine occultant le faisceau lumineux projeté pour capturer une image de la zone d'observation.

La vitesse de déplacement, par exemple la vitesse rotation, de l'obturateur est commandée précisément par le moyen pour alterner.

Selon encore une autre réalisation de l'invention, le système optique comprend un volet mobile placé à proximité du projecteur et de l'un des premier et deuxième dispositifs d'affichage et commandé par le moyen pour alterner. Le volet mobile comprend un orifice qui est adapté à être traversé par le faisceau lumineux projeté par le projecteur vers l'autre des premier et deuxième dispositifs d'affichage pour afficher l'une des images aérienne et de fond, et une surface réfléchissante adaptée à réfléchir le faisceau lumineux projeté pour le rétroprojeter sur ledit un des premier et deuxième dispositifs d'affichage qui est adapté à afficher l'autre des images aérienne et de fond.

D'autres caractéristiques et avantages de la présente invention apparaîtront plus clairement à la lecture de la description suivante de plusieurs réalisations préférées de l'invention, données à titre d'exemples non limitatifs, en référence aux dessins annexés correspondants dans lesquels :
- la figure 1 est une vue de côté schématique d'un système de génération d'image aérienne appartenant à l'état de la technique antérieure de l'invention, déjà commenté ;
- la figure 2 est un bloc-diagramme schématique d'un bi-système de communication comprenant deux systèmes optiques;
- les figures 3A et 3B sont des vues de côté schématiques d'un système optique
- les figures 4A et 4B sont des vues de côté schématiques d'un système optique selon deux variantes d'une première réalisation de l'invention ;
- la figure 5 est une vue de côté schématique d'un système optique selon une deuxième réalisation de l'invention ;
- les figures 6A, 6B, 6C et 6D sont des vues de face schématiques d'obturateurs selon l'invention ;
- les figures 7A, 7B, 7C et 7D sont des vues de côté schématiques de différentes combinaisons de projecteur, dispositif d'affichage et dispositif de capture d'image pour alterner une capture d'image et une diffusion d'image ;
- la figure 8 est une vue en perspective de trois systèmes optiques juxtaposés ;
- la figure 9 est une vue en perspective d'un système optique sous forme de kiosque cylindrique ;
- la figure 10 est une vue en perspective plus détaillée du système optique de la figure 9 ; et
- la figure 11 est une vue de côté schématique d'un système optique.

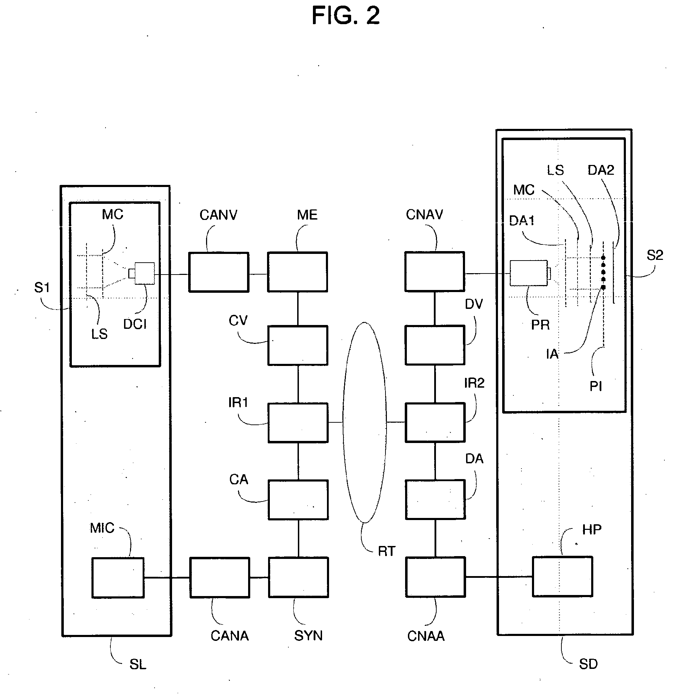

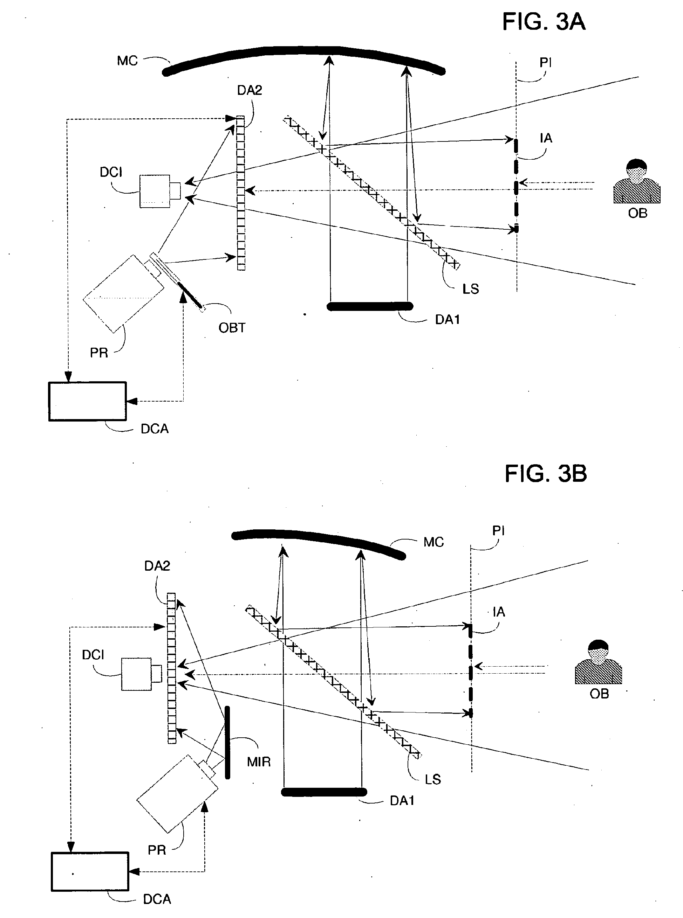

En référence à la figure 2, deux systèmes optiques S1 et S2 sont reliés via un réseau de télécommunication RT pour former un bi-système de communication. Un système optique S1, S2 est représenté plus en détail notamment à la figure 3A ou 3B.

Le système S1 est situé dans une scène locale SL et comprend un dispositif de capture d'image DCI par exemple situé dans la région d'un foyer d'un miroir concave MC et une lame semi-réfléchissante LS afin de capturer une image de la scène locale SL.

L'image capturée est par exemple traitée par un convertisseur analogique - numérique vidéo CANV puis par un module d'extraction ME pour extraire une partie de l'image capturée, par exemple des images d'objet de la scène locale SL. La partie d'image extraite est alors transmise à un codeur vidéo CV pour compresser la partie d'image extraite en une partie d'image compressée qui est ensuite transmise à travers le réseau RT par l'intermédiaire d'une interface de réseau IR1.

Le son de la scène locale SL est capturé par un microphone MIC relié à un convertisseur analogique - numérique audio CANA qui transmet le son capturé à un synchroniseur SYN pour synchroniser le son capturé avec l'image capturée. Le son synchronisé est alors codé par un codeur audio CA avant d'être transmis à travers le réseau RT par l'intermédiaire de l'interface IR1.

Le son et l'image codés sont alors transmis au système S2 situé dans une scène distante SD par l'intermédiaire d'une interface de réseau IR2.

Le son codé est décodé par un décodeur audio DA et traité par un convertisseur numérique - analogique audio CNAA avant d'être transmis à un haut-parleur HP situé dans la scène distante SD. L'image codée est décodée par un décodeur vidéo DV et traitée par un convertisseur numérique - analogique vidéo CNAV avant d'être transmise au système S2.

Le système S2 comprend un projecteur PR pour projeter une image aérienne IA dans un plan PI de l'espace dans la scène locale SL, l'image aérienne représentant la partie extraite de l'image capturée par le système S1. Le système S2 comprend un miroir concave MC et une lame semi-réfléchissante LS et un premier dispositif d'affichage DA1 associé au projecteur PR pour projeter l'image aérienne IA. Le système S2 comprend en outre un deuxième dispositif d'affichage DA2 pour afficher une image de fond.

Les deux systèmes optiques capturent et échangent des images des scènes locale et distante. L'image aérienne IA formée dans le plan PI est alors l'image de la scène locale capturée et transmise par le système S1 au système S2. Puisque les deux systèmes forment un bi-système de communication, le système S2 dispose de moyens fonctionnels similaires à ceux du système S1 décrits précédemment, et réciproquement. Par conséquent, un observateur situé dans la scène distante ou locale peut observer une image aérienne qui est une image de la scène locale ou distante représentant notamment un autre observateur, les observateurs communiquant entre eux par exemple au cours d'une visioconférence.

Selon une exemple montrée aux figures 3A et 3B, un système optique comprend un premier dispositif de capture d'image DCI, un premier dispositif d'affichage DA1, un deuxième dispositif d'affichage DA2, un miroir concave MC, une lame semi-réfléchissante LS, un projecteur PR et un dispositif de commande alternée électronique DCA. Le système optique fait face à une zone d'observation appelée scène locale dans laquelle est situé au moins un observateur OB en vis-à-vis du deuxième dispositif d'affichage DA2.

Au préalable, on positionne les centres géométriques des dispositifs d'affichage DA1 et DA2, de la lame semi-réfléchissante LS et du miroir concave MC pour qu'ils soient sensiblement coplanaires.

Le miroir concave MC a par exemple une forme de paraboloïde ou de partie de paraboloïde, ayant un ou plusieurs foyers principaux et secondaires.

La lame semi-réfléchissante LS est par exemple une lame de verre rectangulaire. Une face semi-réfléchissante de la lame est positionnée dans un plan bissecteur à deux axes optiques sensiblement perpendiculaires et concourants, l'un étant par exemple vertical et celui du dispositif d'affichage DA1 passant par le centre de la surface d'affichage de celui-ci et l'autre étant horizontal et celui du dispositif d'affichage DA2 passant par le centre de la surface d'affichage de celui-ci. La lame est centrée sur les axes optiques et est inclinée sensiblement à 45° par rapport aux axes optiques. Les dispositifs d'affichage DA1 et DA2 sont ainsi disposés perpendiculairement l'un à l'autre, par exemple respectivement horizontalement et verticalement.

Le premier dispositif d'affichage DA1 diffuse un faisceau lumineux à travers la lame semi-réfléchissante LS vers le miroir concave MC afin de projeter une image aérienne IA dans la direction de la zone d'observation où est situé l'observateur OB. Le faisceau lumineux est réfléchi successivement sur le miroir concave MC puis sur la lame semi-réfléchissante LS afin de projeter une image aérienne dans un plan PI de l'espace dans la scène locale.

L'image aérienne IA est représentée en trait interrompu épais sur les figures 3A et 3B. Le plan PI correspond à un avant plan parallèle à la surface d'affichage du deuxième dispositif d'affichage DA2 affichant une image de fond en arrière plan. L'image aérienne IA est formée de manière nette dans le plan PI et est l'image symétrique du plan de la surface d'affichage du premier dispositif d'affichage DA1 par rapport à la lame semi-réfléchissante LS. En d'autres termes, l'image aérienne IA est l'image conjuguée d'un objet réel correspondant à une image formée sur la surface d'affichage du deuxième dispositif d'affichage DA2 par rapport à l'ensemble optique constitué par le miroir concave et la lame semi-réfléchissante. L'image aérienne IA est en réalité affichée sur la lame LS, mais apparaît de manière nette par illusion d'optique pour l'observateur OB dans le plan PI et semble "flotter" dans l'air. La superposition de l'image de fond et de l'image aérienne produit alors un effet de perspective.

Le dispositif de capture d'image DCI capture des images de la scène locale et notamment de l'observateur OB faisant face au deuxième dispositif d'affichage DA2. Le dispositif de capture d'image est par exemple un appareil photographique numérique, une caméra vidéo numérique ou un caméscope. Les images numériques peuvent former une séquence vidéo capturée par une caméra ou un caméscope par exemple.

Les dispositifs d'affichage DA1 et DA2 comprennent par exemple des écrans semi-transparents sur lesquels peut être projetée une image et à travers lesquels un faisceau lumineux peut être propagé. Chaque dispositif d'affichage comprend alors un état d'affichage d'image et un état transparent.

Par exemple, la surface d'affichage d'un dispositif d'affichage est une dalle à plasma commandée par des variations de tension, comme celles utilisées dans les écrans plats à plasma. Dans un autre exemple, la surface d'affichage est une dalle à cristaux liquides commandée en tension et utilisée dans les écrans plats à cristaux liquides LCD ("Liquid Cristal Display" en anglais).

Selon un autre exemple, au moins l'un des dispositifs d'affichage est de type translucide et comprend un vitrage feuilleté composé de deux feuilles de verre entre lesquelles un film à cristaux liquides est placé. Les deux faces du film à cristaux liquides sont recouvertes d'une couche transparente conductrice électriquement. Ainsi, le vitrage feuilleté commandé par un signal électrique passe d'un état d'affichage d'image qui correspond à un état translucide ou opalin du vitrage pour lequel les cristaux liquides sont à des positions désordonnées, à un état transparent pour lequel les cristaux liquides sont à des positions alignées.

Selon encore un autre exemple, l'un des dispositifs d'affichage comprend une surface d'affichage de type "transflectif", contenant une dalle de verre antireflet sur laquelle est collé un film plastique. Le film plastique contient des protubérances qui réfléchissent un faisceau lumineux seulement sous un angle d'incidence prédéterminé. Pour d'autres angles d'incidence, le film plastique laisse passer la lumière de part et d'autre.

L'un des dispositifs d'affichage peut être en outre un écran à tube cathodique.

Comme montré aux figures 3A et 3B, le dispositif de capture d'image DCI est situé derrière le deuxième dispositif d'affichage DA2 par rapport à l'observateur OB et capture des images de la scène locale et notamment de l'observateur. Le dispositif de capture d'image DCI a un axe optique qui est confondu avec un axe optique d'observation et est orienté en direction de la projection de l'image aérienne IA devant l'observateur et présente un champ de vision conique dans la direction de la scène locale et de l'observateur.

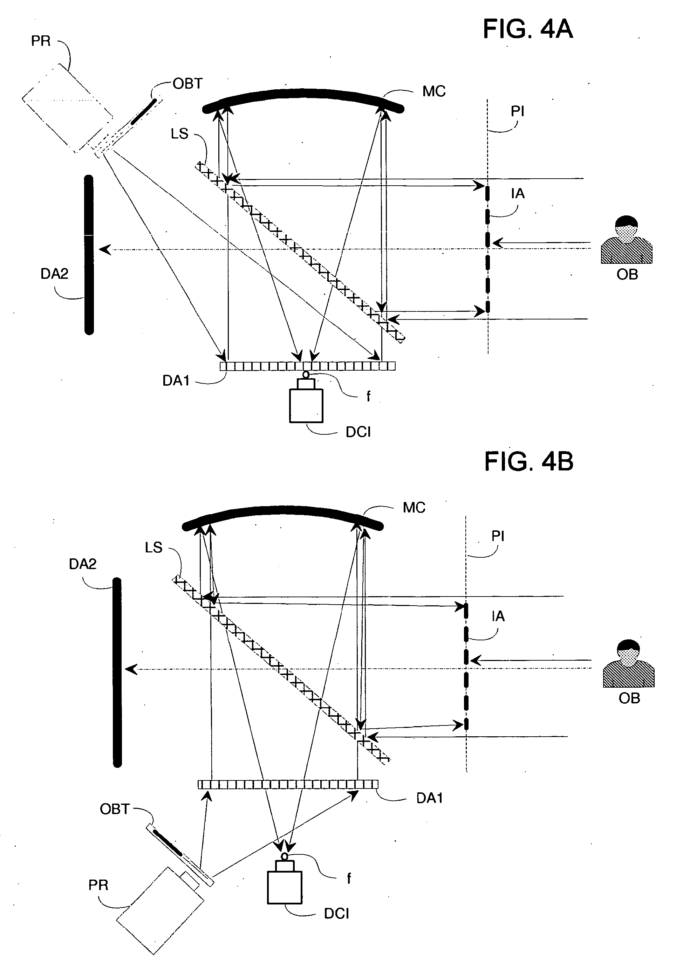

De manière générale, le projecteur PR est associé à l'un des dispositifs d'affichage DA1 et DA2 pour projeter des images. Par exemple, le projecteur projette une image de fond, par exemple pré-mémorisée, sur la face arrière du deuxième dispositif d'affichage DA2, comme montré aux figues 3A et 3B. Selon un autre exemple montré aux figures 4A et 4B, le projecteur PR projette une image source d'un objet correspondant à l'image aérienne IA sur la face avant du premier dispositif d'affichage DA1. L'image source correspondant à l'image aérienne IA représente par exemple la partie extraite de l'image capturée par un système optique distant et incluant la silhouette d'un observateur. Le dispositif d'affichage DA1 diffuse alors à travers la lame semi-réfléchissante LS un faisceau lumineux qui est réfléchi sur le miroir concave MC puis sur la lame semi-réfléchissante LS pour former l'image aérienne IA dans la direction de l'observateur OB.

Comme montré à la figure 3A, l'image de fond est directement projetée sous une incidence prédéterminée par le projecteur PR sur le deuxième dispositif d'affichage DA2 qui comprend par exemple une surface d'affichage de type translucide. Le dispositif de capture d'image DCI est alors placé à une distance suffisante du deuxième dispositif d'affichage DA2 pour ne pas occulter la projection de l'image de fond.

Comme montré à la figure 3B, le projecteur PR est rapproché du premier dispositif d'affichage DA1 et situé sous le deuxième dispositif d'affichage DA2. Un miroir plan MIR placé entre le projecteur PR et le premier dispositif d'affichage DA1 réfléchit le faisceau lumineux émis par le projecteur PR pour rétroprojeter le faisceau lumineux sur la face avant du deuxième dispositif d'affichage DA2 et y former ainsi l'image de fond. Le dispositif de capture d'image DCI est alors rapproché de la face arrière du deuxième dispositif d'affichage DA2. Dans cette variante, la disposition confinée des dispositifs d'affichage et du projecteur réduit l'encombrement du système optique.

Le dispositif de commande alternée électronique DCA commande alternativement la capture de l'image de la scène locale par le dispositif de capture d'image DCI et l'émission du faisceau lumineux par le projecteur PR pour afficher l'image de fond selon la figure 3A ou 3B ou l'image aérienne IA selon la figure 4A ou 4B.

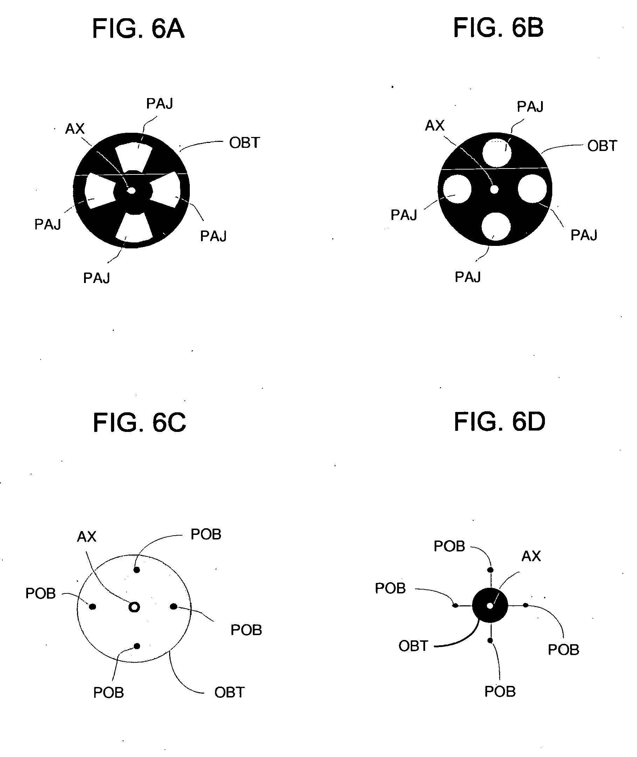

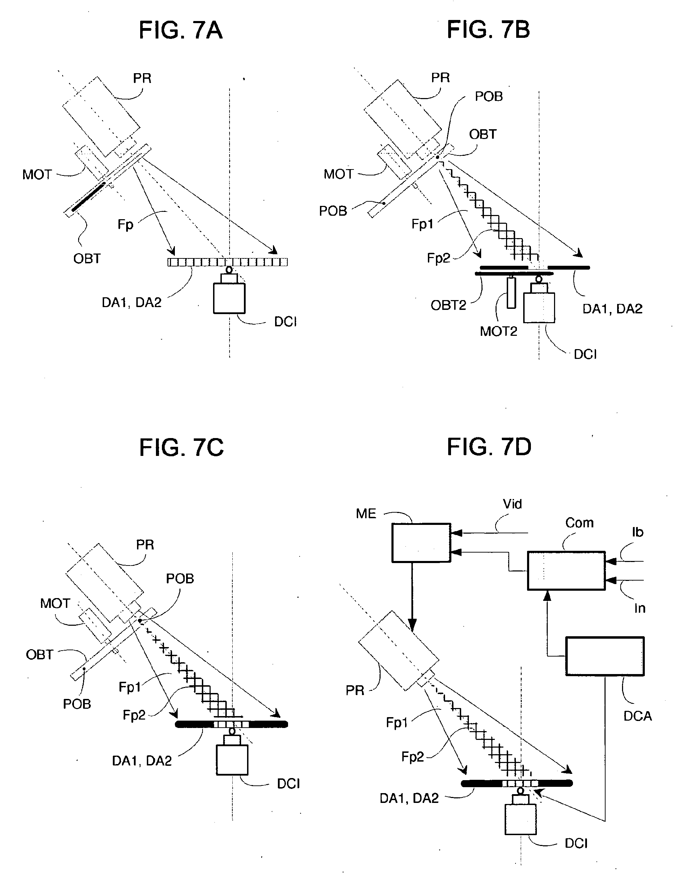

Selon la figure 3A, le dispositif de commande alternée DCA commande le moteur électrique d'un obturateur OBT comportant des parties ajourées devant le projecteur et décrit plus en détail ci-après en référence aux figures 6A à 6D et 7A à 7D, afin alternativement d'obturer et de laisser passer un faisceau lumineux émis par le projecteur. Selon la figure 3B, le dispositif de commande alternée DCA alternativement transmet un signal d'image et ne transmet aucun signal d'image au projecteur afin qu'alternativement ce dernier projette un faisceau lumineux et ne projette aucun faisceau lumineux.

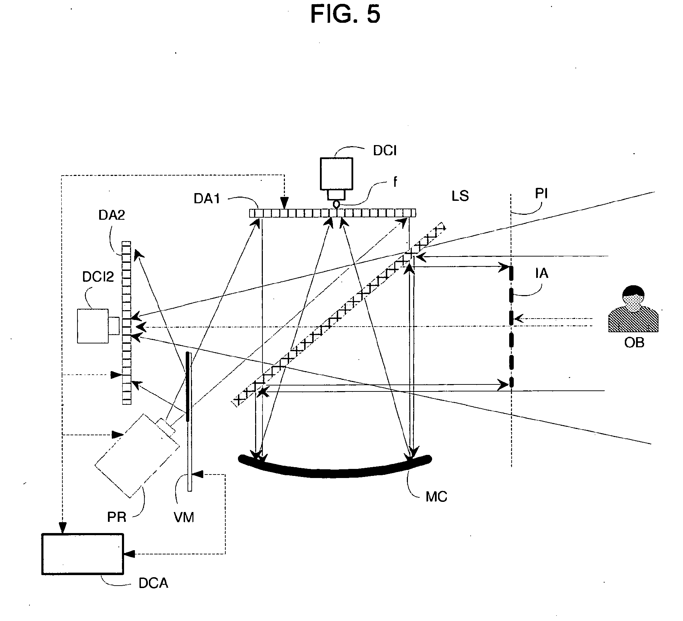

Dans la réalisation montrée à la figure 5, le dispositif de commande alternée DCA est relié au projecteur PR pour que ce dernier projette alternativement une image aérienne et une image de fond.

Le dispositif de commande alternée DCA est en outre relié à au moins l'un des dispositifs d'affichage DA1 et DA2, par exemple pour commander le dispositif d'affichage de type translucide alternativement à l'état opaque et à l'état transparent.

Dans tous les cas, le dispositif de capture d'image DCI est disposé derrière l'un des dispositifs d'affichage DA1 et DA2 sur lequel est projeté un faisceau lumineux pour afficher l'image de fond ou l'image aérienne. Le dispositif de commande alternée DCA fait concorder la projection du faisceau lumineux par le projecteur sur ledit un dispositif d'affichage et l'état opaque dudit un dispositif d'affichage pour afficher l'image souhaitée, et commande ledit un dispositif d'affichage à l'état transparent et la suppression du faisceau lumineux lorsqu'aucun faisceau lumineux n'est projeté, pour une capture d'image par le dispositif DCI.

Mais le dispositif de capture d'image DCI peut capturer constamment des images, et seulement une image sur deux est ensuite traitée.

Pour ne pas surcharger les autres figures, le dispositif de commande alternée DCA est représenté seulement sur les figures 3A, 3B, 5 et 7D.

Selon une première réalisation de l'invention montrée aux figures 4A et 4B, le premier dispositif de capture d'image DCI est situé à proximité d'un foyer f du miroir concave MC. Le dispositif DCI, le miroir MC et la lame semi-réfléchissante LS forment un ensemble optique télécentrique dont le champ de vision est cylindrique dans la direction de la scène locale et de l'observateur OB. Le dispositif de capture d'image DCI est alors disposé derrière le premier dispositif d'affichage DA1 et à proximité de celui-ci.

Comme montré à la figure 4A, le projecteur PR est disposé entre le deuxième dispositif d'affichage DA2 et le miroir concave MC et latéralement à un chant de la lame semi-réfléchissante LS à l'opposé du dispositif d'affichage DA1. Le projecteur PR projette l'image source correspondant à l'image aérienne IA sur la face avant du dispositif d'affichage DA1 selon un axe de projection sensiblement parallèle au plan de la lame semi-réfléchissante LS. Le dispositif d'affichage DA1, qui comprend par exemple une surface d'affichage de type translucide, réfléchit le faisceau lumineux produit par le projecteur PR et le diffuse à travers la lame LS. Le faisceau lumineux est ensuite réfléchi successivement sur le miroir concave MC puis sur la lame LS pour former l'image aérienne IA dans le plan PI.

Comme montré à la figure 4B, le projecteur PR est disposé entre le deuxième dispositif d'affichage DA2 et le dispositif de capture d'image DCI, derrière le premier dispositif d'affichage DA1 sur la face arrière duquel le faisceau lumineux émis avec l'image source correspondant à l'image aérienne IA par le projecteur PR est rétroprojeté sous une incidence prédéterminée. Le dispositif de capture d'image DCI est alors placé à une distance suffisante du premier dispositif d'affichage DA1 pour ne pas occulter le faisceau lumineux.

Dans les figures 4A et 4B, le deuxième dispositif d'affichage DA2 contient par exemple un écran plat à cristaux liquides et affiche une image de fond sous-jacente à l'image aérienne projetée IA pour l'observateur OB. Le dispositif de commande alternée DCA, non représentée sur les figures 4A et 4B, alterne la capture et l'affichage d'images, en faisant concorder l'état opaque du premier dispositif d'affichage DA1 avec la projection de l'image source correspondant à l'image aérienne IA par le projecteur PR et l'état transparent du dispositif DA1 avec l'obturation de la projection de l'image IA par l'obturateur OBT.

Selon une deuxième réalisation de l'invention montrée à la figure 5, le montage du dispositif de capture d'image DCI, du premier dispositif d'affichage DA1, du projecteur PR et du miroir concave MC est symétrique du montage de la figure 4A par rapport à l'axe optique d'observation entre le deuxième dispositif d'affichage DA2. et l'observateur OB. Ce montage inversé est d'intérêt pour réduire la charge sollicitée par la structure du système optique, le poids imposé par le miroir concave MC pouvant nécessiter un support adéquat et onéreux.

Comme montré à la figure 5, un volet mobile VM est placé entre le projecteur PR et le premier dispositif d'affichage DA1, à proximité du projecteur et du deuxième dispositif d'affichage DA2. La partie haute du volet VM est déplacé alternativement, selon une cadence prédéterminée, pour présenter en travers du faisceau lumineux projeté par le projecteur PR un orifice et une surface réfléchissante représentée par un trait noir épais sur la figure 5. L'orifice du volet est traversé par le faisceau lumineux projeté vers la face avant du premier dispositif d'affichage DA1 dont la surface d'affichage est semi-transparente afin de former l'image aérienne IA. La surface réfléchissante du volet réfléchit le faisceau lumineux émis par le projecteur PR pour que le faisceau lumineux soit rétroprojeté en direction de la zone d'observation par la face avant du deuxième dispositif d'affichage DA2 dont la surface d'affichage est également semi-transparente et forme ainsi l'image de fond.

Le système optique de la figure 5 comprend un deuxième dispositif de capture d'image DCI2 situé derrière le deuxième dispositif d'affichage DA2. Le dispositif DCI2 a un axe optique colinéaire à l'axe optique d'observation et un champ de vision conique dans la direction de la scène locale.

Le dispositif de commande alternée DCA règle la cadence du projecteur PR sur la cadence de déplacement du volet VM pour projeter alternativement une image de fond en arrière plan sur le deuxième dispositif d'affichage DA2 et une image aérienne IA au plan PI par l'intermédiaire du premier dispositif d'affichage DA1. Le dispositif de commande DCA commande simultanément l'état opaque du dispositif d'affichage DA1, pour que l'image aérienne IA projetée depuis le projecteur PR y soit réfléchie et l'état transparent du dispositif d'affichage DA2 pour que le deuxième dispositif de capture d'image DCI2 capture une image de la scène locale superposée à l'image aérienne IA selon un champ de vision conique, afin de localiser globalement la position du ou des observateurs. Le dispositif de commande DCA commande simultanément l'état transparent du dispositif d'affichage DA1 pour que le premier dispositif de capture d'image DCI situé derrière le dispositif d'affichage DA1 capture une image de la scène locale selon un champ de vision cylindrique, et l'état opaque du dispositif d'affichage DA2 pour que l'image de fond projetée depuis le projecteur PR y soit réfléchie en arrière plan devant l'observateur OB. Lorsque l'image de fond est projetée, le dispositif de capture d'image DCI capture une image de la scène locale plus précise selon un champ de vision cylindrique autorisant une prise de vue télécentrique.

En référence aux figures 6A, 6B, 6C et 6D, l'obturateur OBT comprend un disque rotatif qui est fixé sur l'axe AX d'un moteur électrique MOT montré par exemple à la figure 7A. Le disque de l'obturateur OBT comprend des parties ajourées PAJ régulièrement réparties circulairement, au nombre de quatre par exemple, pour laisser passer un faisceau lumineux, et alternées avec des parties pleines, comme montré aux figures 6A et 6B, ou comprend une surface transparente contenant des parties d'obturation POB régulièrement réparties circulairement, au nombre de quatre par exemple, comme montré aux figures 6C et 6D. La vitesse de rotation du moteur MOT, et par conséquent de l'obturateur OBT, est contrôlée par exemple grâce à des capteurs optoélectroniques ou par des techniques classiques de moteur pas à pas.

Comme montré aux figures 6A, 6B et 7A, l'obturateur OBT présente des parties ajourées PAJ, par exemple en secteurs de couronne ou en trous circulaires, pour laisser passer un faisceau lumineux Fp émis par le projecteur PR et projeté sur un dispositif d'affichage DA1 ou DA2 de type translucide par exemple. Le dispositif de commande alternée DCA, non représenté sur ces figures, alterne une capture d'image et une émission de faisceau lumineux en commandant le dispositif d'affichage et le moteur MOT associé à l'obturateur OBT selon deux phases décrites ci-après. Dans une première phase, le dispositif d'affichage passe à un état opaque pour afficher une image projetée par le projecteur et ayant traversé une partie ajourée PAJ de l'obturateur OBT, et dans une deuxième phase, le dispositif d'affichage passe à un état transparent pour une capture d'image par le dispositif de capture d'image DCI tandis que le faisceau lumineux Fp du projecteur PR est obturé par une partie pleine de l'obturateur OBT. Le dispositif de commande alternée DCA règle donc la vitesse de rotation de l'obturateur OBT pour faire concorder l'alternance des états opaque et transparent du dispositif d'affichage avec l'alternance des parties ajourées et pleines de l'obturateur faisant face au projecteur. Par exemple, l'obturateur est tourné d'un huitième de tour lorsque le dispositif d'affichage change d'état d'affichage.

En référence à la figure 7B, l'obturateur OBT, tel que représenté plus en détail sur la figure 6C ou 6D, est associé au projecteur PR. Un autre obturateur OBT2, tel que détaillé à la figure 6A ou 6B, est situé entre le dispositif de capture d'image DCI et le dispositif d'affichage DA1 ou DA2 qui est un disque opaque à ouverture centrale et surface d'affichage classique. Le dispositif de commande alternée DCA, non représenté sur la figure 7B, alterne une capture d'image et une émission de faisceau lumineux en commandant les moteurs MOT et MOT2 respectivement associés aux obturateurs OBT et OBT2 selon deux phases décrites ci-après. Le projecteur PR peut émettre des faisceaux coaxiaux Fp1 et Fp2 dont l'un Fp2 est central à l'autre Fol. Dans une première phase, une partie pleine de l'obturateur OBT2 bouche l'ouverture centrale du dispositif d'affichage DA1, DA2, tandis que le projecteur PR émet des faisceaux Fp1 et Fp2 à travers une partie transparente de l'obturateur OBT pour afficher une image complète sur le dispositif d'affichage. Dans une deuxième phase, une partie ajourée PAJ de l'obturateur OBT2 autorise une capture d'image par le dispositif de capture d'image DCI via l'ouverture au centre du dispositif d'affichage, tandis que le projecteur PR émet seulement le faisceau Fp1 à travers une partie transparente de l'obturateur OBT pour afficher une image incomplète sur le dispositif d'affichage, et le faisceau Fp2 atteignant l'ouverture centrale du dispositif d'affichage est obturé par une partie d'obturation POB de l'obturateur OBT.

Le dispositif de commande alternée DCA, non représenté à la figure 7B, alterne la capture d'image par le dispositif de capture d'image DCI et l'émission du faisceau lumineux par le projecteur PR par l'intermédiaire des obturateurs OBT et OBT2 dont les vitesses de rotation sont synchronisées par le dispositif DCA. Le dispositif DCA est donc associé au dispositif d'affichage indirectement par l'intermédiaire du moteur MOT2 de l'obturateur OBT2 associé au dispositif d'affichage.

En référence à la figure 7C, le dispositif d'affichage DA1 ou DA2 comprend un écran translucide central ayant le rôle de l'obturateur OBT2 de la figure 7B. L'écran translucide passe à un état opaque pour former une image complète sur le dispositif d'affichage, tandis que le projecteur PR émet des faisceaux Fp1 et Fp2 à travers une partie transparente de l'obturateur OBT. L'écran translucide passe à un état transparent pour autoriser une capture d'image par le dispositif de capture d'image DCI, tandis que le faisceau Fp2 émis par le projecteur est obturé par une partie d'obturation POB de l'obturateur OBT.

En référence à la figue 7D, l'obturation sélective concave des faisceaux Fp1 et Fp2 émis par le projecteur PR, comme décrit à la figure 7C, est réalisée électroniquement. Un signal vidéo peut être raccordé à une première entrée Vid d'un mélangeur vidéo ME, tandis qu'une deuxième entrée du mélangeur ME est reliée à un commutateur Com transmettant alternativement un signal d'image "blanche" Ib correspondant à un niveau de luminance élevé et un signal d'une image In comportant un point noir central correspondant à un niveau de luminance faible. La commutation est synchronisée avec celle du dispositif d'affichage DA1 ou DA2 de type translucide, pour alterner la capture d'image et l'affichage d'image sur une base temporelle sous la commande du dispositif de commande alternée DCA.

En variante, toute la surface d'affichage du dispositif d'affichage est un écran de type translucide et l'image In est totalement noire afin que le projecteur ne projette aucun faisceau lumineux sur le dispositif d'affichage.

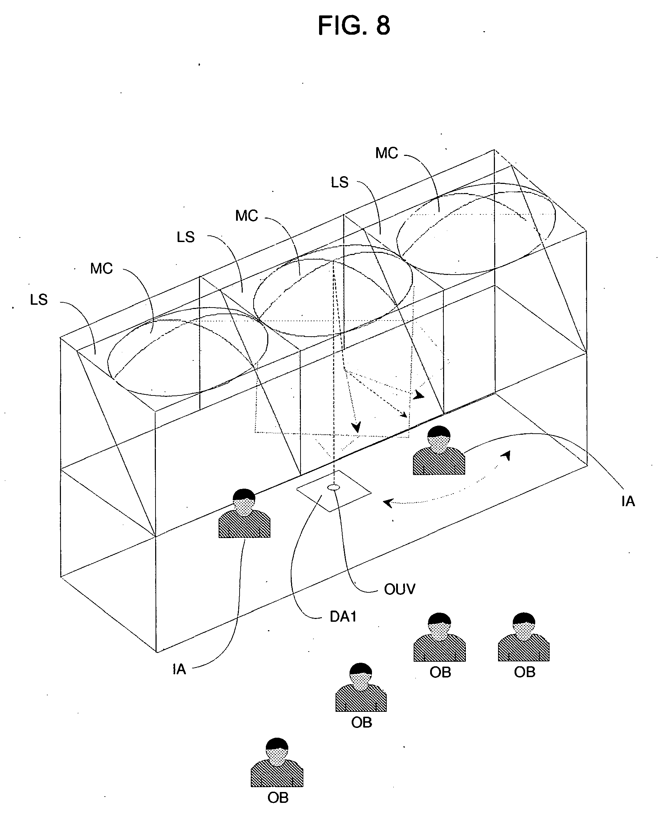

La figure 8 met en évidence l'aspect modulaire et compact des systèmes optiques selon l'invention. Par exemple, trois systèmes optiques comprenant les mêmes moyens fonctionnels sont juxtaposés horizontalement et destinés à un groupe d'observateurs OB situés dans la zone d'observation comme une pièce locale. Chaque lame semi-réfléchissante LS est mobile afin d'orienter la capture d'image de la scène locale et la projection de l'image aérienne IA, incluant la silhouette d'un interlocuteur distant, suivant la direction du groupe d'observateurs. Par exemple, le miroir concave MC est disposé face au premier dispositif d'affichage DA1 pour afficher l'image aérienne IA, tandis qu'une ouverture OUV est ménagée dans le premier dispositif d'affichage pour une capture d'image selon une prise de vue télécentrique.

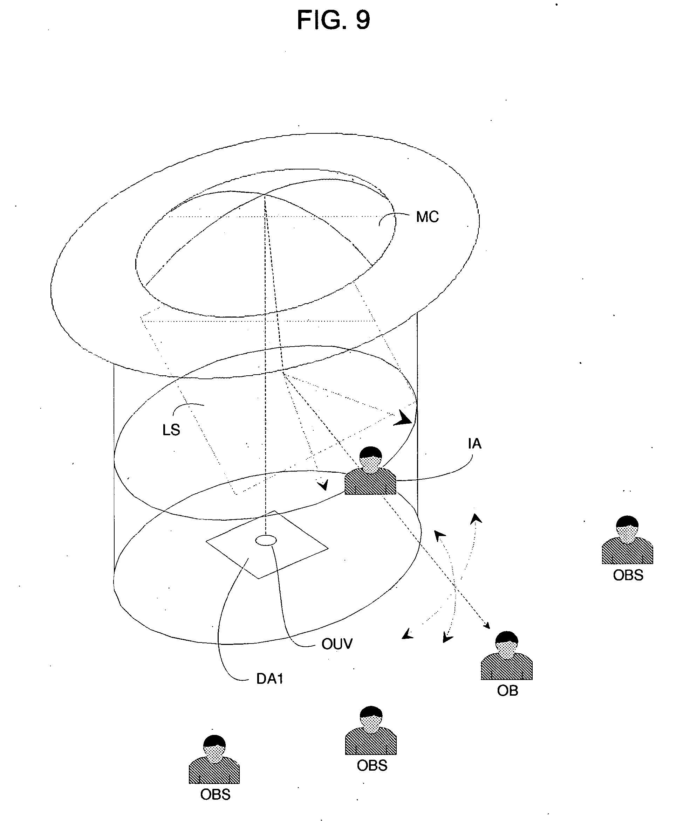

En référence à la figure 9, seul un système optique est représenté sous une forme de kiosque cylindrique. La lame semi-réfléchissante LS est mobile afin d'orienter la capture d'image de la scène locale et la projection de l'image aérienne IA suivant la direction de l'observateur OB, ou d'un auditoire composé de plusieurs observateurs OBS dans une zone d'observation.

Dans un premier temps, l'image de chaque observateur OBS de l'auditoire peut être capturée par une capture d'image classique, à l'aide d'un deuxième dispositif de capture d'image DCI2, comme illustré à la figure 5, qui dispose d'un champ de vision conique pour localiser un groupe de personnes. Dans un deuxième temps, le dispositif de capture d'image DCI capture une image de la scène locale plus précise selon un champ de vision cylindrique et correspondant à une prise de vue télécentrique afin de capturer seulement l'image de l'observateur locuteur OB dialoguant avec un participant locuteur dans la scène distante, ladite image étant visualisée par le système optique distant devant le participant locuteur, comme dans le bi-système de communication montré à la figure 2.

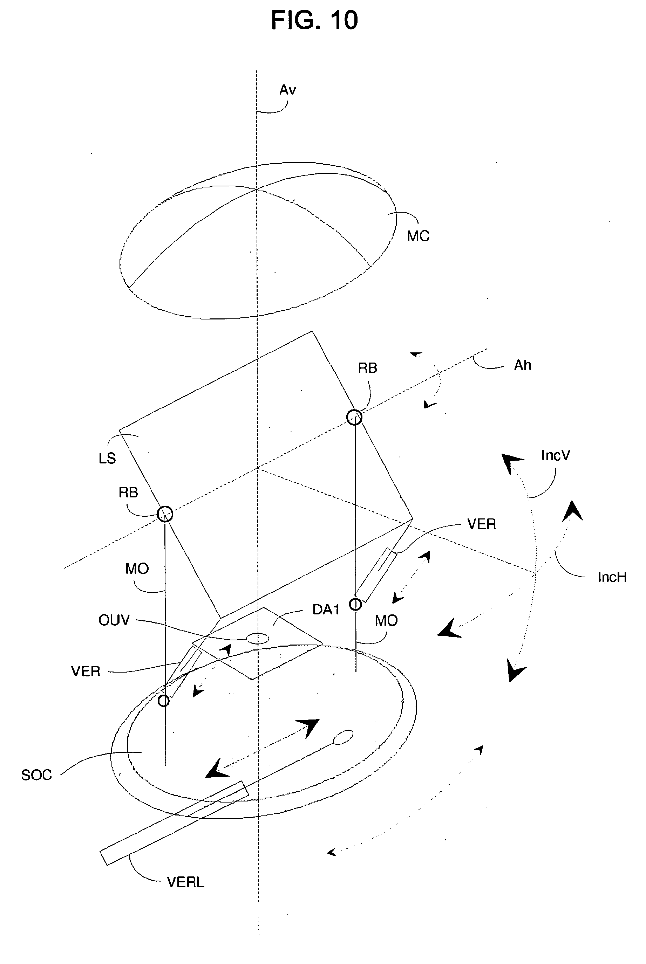

En référence à la figure 10, la lame semi-réfléchissante LS est monté à rotation autour d'un axe de rotation Ah, ici horizontal, par l'intermédiaire de roulements à billes latéraux RB supportés par des extrémités supérieures de montants MO fixés sur un socle horizontal SOC. La lame LS tourne autour de l'axe de rotation Ah selon une incidence verticale variable IncV grâce aux actions de deux vérins parallèles VER montés entre les extrémités inférieures de montants MO et un côté de la lame LS parallèle à l'axe de rotation Ah. Par ailleurs, le socle SOC est monté à rotation sur une plateforme reposant sur le sol autour d'un axe de rotation Av, ici vertical, perpendiculaire à l'axe de rotation Ah et centré sur le miroir concave MC. La lame semi-réfléchissante LS supportée par les montants MO tourne également autour de l'axe de rotation Av selon une incidence horizontale variable IncH par l'intermédiaire d'un vérin latéral VERL monté entre le socle SOC et la plateforme.

La mobilité de la lame semi-réfléchissante LS autour des axes de rotation perpendiculaires Av et Ah comme un joint de cardan autorise une capture d'image de la scène locale et un affichage de l'image aérienne suivant toutes les directions relatives à l'observateur selon des incidences horizontale et verticale IncH et IncV.

La capture d'image de la scène locale et l'affichage de l'image aérienne sont réalisés en deux temps :
- dans un premier temps, la prise de vue télécentrique orientable est obtenue grâce à la mobilité de la lame semi-transparente qui sert à pointer un faisceau lumineux cylindrique dans la direction de l'observateur, à renvoyer ce faisceau sur le miroir concave MC et par réflexion à faire converger ce faisceau en un foyer du miroir concave où est situé le dispositif de capture d'image via une ouverture OUV ménagée dans le premier dispositif d'affichage ;
- dans un deuxième temps, l'affichage de l'image aérienne dans toutes les directions est obtenu par l'orientation de la lame semi-transparente. Pour afficher l'image aérienne comme selon la figure 5, un faisceau lumineux est projeté sur le premier dispositif d'affichage DA1 qui le diffuse à travers la lame semi-transparente pour être réfléchi sur le miroir concave et renvoyé suivant la direction de l'observateur par l'intermédiaire de la lame semi-transparente orientable. L'orientation de l'affichage de l'image aérienne confère un effet de contact les yeux dans les yeux qui s'avère utile, notamment pour les personnes de petite ou de grande taille, à mobilité réduite ou les malentendants qui utilisent le langage des signes pour communiquer.

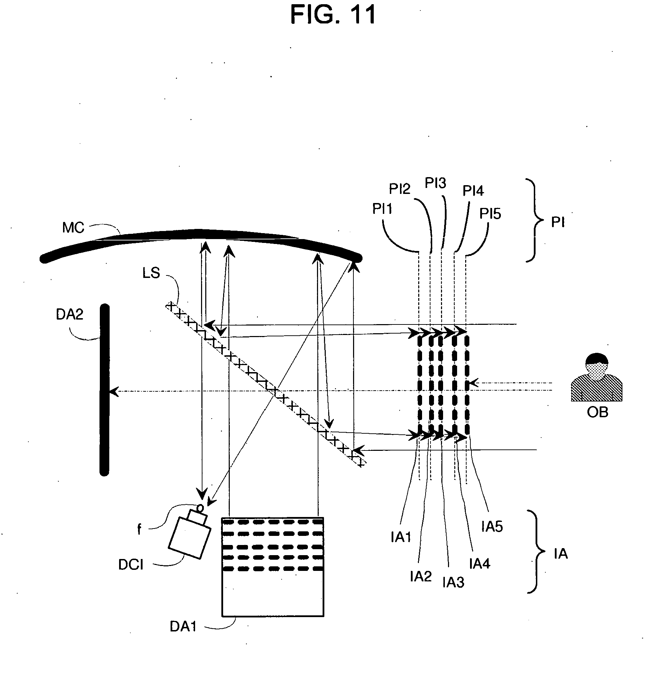

Selon une troisième réalisation de l'invention montrée à la figure 11, un système optique selon l'invention affiche des images "holographiques" chacune composée d'une superposition spatiale d'images aériennes proches, par exemple cinq, en utilisant un premier dispositif d'affichage DA1 de type "volumétrique multi-planar" (multicouches) situé à côté du dispositif de capture d'image DCI.

L'écran volumétrique multi-planar dans le système optique restitue un effet de perspective par superpositions d'images aériennes IA1, IA2, IA3, IA4 et IA5 en deux dimensions qui sont perçues respectivement dans des plans PI1, PI2, PI3, PI4 et PI5 de l'espace par des observateurs dans une zone d'observation.

L'invention n'est pas limitée aux réalisations décrites ci-dessus et à leurs variantes. Des montages de certains éléments du système optique décrits en référence à une figure particulière selon une réalisation de l'invention peuvent être combinés à d'autres montages selon une autre réalisation de l'invention. Par exemple, le deuxième dispositif de capture d'image DCI2 montré à la figure 5 peut être utilisé dans le système optique décrit à la figure 3A. Le deuxième dispositif de capture d'image DCI2 est alors situé à proximité d'un foyer du miroir concave MC, sous le premier dispositif d'affichage DA1 dont la surface d'affichage est translucide.

## Revendications

1. Système optique comprenant un premier dispositif de capture d'image (DCI) pour capturer une image d'une zone d'observation, un premier dispositif d'affichage (DA1), une lame semi-réfléchissante (LS), un miroir concave (MC) disposé face au premier dispositif d'affichage et un deuxième dispositif d'affichage (DA2) pour afficher une image de fond, un faisceau lumineux étant diffusé par le premier dispositif d'affichage à travers la lame semi-réfléchissante, puis réfléchi sur le miroir et la lame semi-réfléchissante afin d'afficher une image aérienne (IA) entre la lame semi-réfléchissante et la zone d'observation, **caractérisé en ce que** le système comprend :
un projecteur (PR) apte à projeter un faisceau lumineux vers le premier dispositif d'affichage (DA1), le premier dispositif de capture d'image (DCI) étant situé derrière le premier dispositif d'affichage (DA1) à proximité d'un foyer du miroir concave (MC) et apte à capturer l'image de la zone d'observation à travers le premier dispositif d'affichage et formant avec le miroir et la lame semi-réfléchissante (LS) un ensemble optique télécentrique dont le champ de vision est cylindrique en direction de l'image aérienne (IA) et de la zone d'observation, et
un moyen (DCA) pour alterner la capture de l'image de la zone d'observation par le premier dispositif de capture d'image (DCI) et la projection du faisceau lumineux par le projecteur (PR).

2. Système conforme à la revendication 1, comprenant un deuxième dispositif de capture d'image (DCI2) situé derrière le deuxième dispositif d'affichage (DA2).

3. Système conforme à la revendication 1 ou 2, dans lequel le dispositif d'affichage (DA1, DA2) derrière lequel est situé un dispositif de capture d'image (DCI1, DCI2) est semi-transparent.

4. Système conforme à l'une quelconque des revendications 1 à 3, dans lequel l'un des dispositifs d'affichage (DA1, DA2) est adapté à être tantôt à un état translucide, tantôt à un état transparent.

5. Système conforme à l'une quelconque des revendications 1 à 4, dans lequel, les dispositifs d'affichage (DA1, DA2) ont des axes optiques perpendiculaires, le deuxième dispositif d'affichage (DA2) affiche l'image de fond en arrière plan et le premier dispositif d'affichage (DA1) affiche l'image aérienne (IA) en avant plan par réflexion sur la lame semi-réfléchissante (LS) en direction de la zone d'observation.

6. Système conforme à l'une quelconque des revendications 1 à 5, comprenant un moyen (RB, VER, SOC, VERL) pour tourner la lame semi-réfléchissante (LS) autour de deux axes de rotation perpendiculaires (Ah, Av).

7. Système conforme à l'une quelconque des revendications 1 à 6, dans lequel le moyen pour alterner (DCA) commande l'un des dispositifs d'affichage (DA1, DA2) à un état opaque et la projection du faisceau lumineux par le projecteur sur ledit un dispositif d'affichage, et commande ledit un dispositif d'affichage à un état transparent et la suppression du faisceau lumineux.

8. Système conforme à l'une quelconque des revendications 1 à 7, comprenant un obturateur (OBT) commandé par le moyen pour alterner (DCA) et comprenant au moins une partie ajourée qui est traversée par le faisceau lumineux projeté par le projecteur (PR) vers l'un des premier et deuxième dispositifs d'affichage (DA1, DA2) pour afficher l'une des images aérienne et de fond, et au moins une partie pleine occultant le faisceau lumineux projeté pour capturer une image de la zone d'observation.

9. Système conforme à l'une quelconque des revendications 1 à 7, comprenant un volet mobile (VM) placé à proximité du projecteur (PR) et de l'un des premier et deuxième dispositifs d'affichage (DA1, DA2) et commandé par le moyen pour alterner (DCA), le volet mobile comprenant un orifice qui est adapté à être traversé par le faisceau lumineux projeté par le projecteur (PR) vers l'autre des premier et deuxième dispositifs d'affichage (DA1, DA2) pour afficher l'une des images aérienne et de fond, et une surface réfléchissante adaptée à réfléchir le faisceau lumineux projeté pour le rétroprojeter sur ledit un des premier et deuxième dispositifs d'affichage (DA1, DA2) qui est adapté à afficher l'autre des images aérienne et de fond.

10. Système de communication comprenant deux systèmes optiques conformes à l'une quelconque des revendications 1 à 9 et situés respectivement dans une scène locale et une scène distante, l'image aérienne (IA) affichée dans l'un des systèmes optiques correspondant à l'image capturée par le premier dispositif de capture d'image (DCI) de l'autre des systèmes optiques.

## Claims

1. Optical system comprising a first image capture device (DCI) for capturing an image of an observation zone, a first display device (DA1), a semi-reflecting plate (LS), a concave mirror (MC) disposed facing the first display device and a second display device (DA2) for displaying a background image, a light beam being scattered by the first display device through the semi-reflecting plate, and then reflected on the mirror and the semi-reflecting plate so as to display an aerial image (IA) between the semi-reflecting plate and the observation zone, **characterized in that** the system comprises:
a projector (PR) able to project a light beam towards the first display device (DA1), the first image capture device (DCI) being situated behind the first display device (DA1) in proximity to a focus of the concave mirror (MC) and able to capture the image of the observation zone through the first display device and forming with the mirror and the semi-reflecting plate (LS) a telecentric optical assembly whose field of view is cylindrical in the direction of the aerial image (IA) and of the observation zone, and
a means (DCA) for alternating the capture of the image of the observation zone by the first image capture device (DCI) and the projection of the light beam by the projector (PR).

2. System in accordance with Claim 1, comprising a second image capture device (DCI2) situated behind the second display device (DA2).

3. System in accordance with Claim 1 or 2, in which the display device (DA1, DA2) behind which an image capture device (DCI1, DCI2) is situated is semi-transparent.

4. System in accordance with any one of Claims 1 to 3, in which one of the display devices (DA1, DA2) is adapted to be sometimes in a translucent state and sometimes in a transparent state.

5. System in accordance with any one of Claims 1 to 4, in which the display devices (DA1, DA2) have perpendicular optical axes, the second display device (DA2) displays the background image as a backdrop and the first display device (DA1) displays the aerial image (IA) in the foreground by reflection on the semi-reflecting plate (LS) in the direction of the observation zone.

6. System in accordance with any one of Claims 1 to 5, comprising a means (RB, VER, SOC, VERL) for rotating the semi-reflecting plate (LS) about two perpendicular rotation axes (Ah, Av).

7. System in accordance with any one of Claims 1 to 6, in which the means for alternating (DCA) instructs one of the display devices (DA1, DA2) into an opaque state and the projection of the light beam by the projector onto the said one display device, and instructs the said one display device into a transparent state and the suppression of the light beam.

8. System in accordance with any one of Claims 1 to 7, comprising a shutter (OBT) controlled by the means for alternating (DCA) and comprising at least one perforated part which is traversed by the light beam projected by the projector (PR) towards one of the first and second display devices (DA1, DA2) so as to display one of the aerial and background images, and at least one solid part occulting the projected light beam so as to capture an image of the observation zone.

9. System in accordance with any one of Claims 1 to 7, comprising a movable flap (VM) placed in proximity to the projector (PR) and to one of the first and second display devices (DA1, DA2) and controlled by the means for alternating (DCA), the movable flap comprising an orifice which is adapted to be traversed by the light beam projected by the projector (PR) towards the other of the first and second display devices (DA1, DA2) so as to display one of the aerial and background images, and a reflecting surface adapted for reflecting the projected light beam so as to back-project it onto the said one of the first and second display devices (DA1, DA2) which is adapted for displaying the other of the aerial and background images.

10. Communication system comprising two optical systems in accordance with any one of Claims 1 to 9 and situated respectively in a local scene and a distant scene, the aerial image (IA) displayed in one of the optical systems corresponding to the image captured by the first image capture device (DCI) of the other of the optical systems.

## Patentansprüche

1. Optisches System, das eine erste Bilderfassungsvorrichtung (DCI) zur Erfassung eines Bilds einer Beobachtungszone, eine erste Anzeigevorrichtung (DA1), ein halbreflektierendes Plättchen (LS), einen konkaven Spiegel (MC), der gegenüber der ersten Anzeigevorrichtung angeordnet ist, und eine zweite Anzeigevorrichtung (DA2) enthält, um ein Hintergrundbild anzuzeigen, wobei ein Lichtstrahl von der ersten Anzeigevorrichtung durch das halbreflektierende Plättchen hindurch diffundiert und dann auf dem Spiegel und dem halbreflektierenden Plättchen reflektiert wird, um ein Luftbild (IA) zwischen dem halbreflektierenden Plättchen und der Beobachtungszone anzuzeigen, **dadurch gekennzeichnet, dass** das System enthält:
einen Projektor (PR), der einen Lichtstrahl zur ersten Anzeigevorrichtung (DA1) projizieren kann, wobei die erste Bilderfassungsvorrichtung (DCI) sich hinter der ersten Anzeigevorrichtung (DA1) in der Nähe eines Brennpunkts des konkaven Spiegels (MC) befindet und das Bild der Beobachtungszone über die erste Anzeigevorrichtung erfassen kann und mit dem Spiegel und dem halbreflektierenden Plättchen (LS) eine telezentrische optische Einheit bildet, deren Sichtfeld in Richtung des Luftbilds (IA) und der Beobachtungszone zylindrisch ist, und
eine Einrichtung (DCA), um die Erfassung des Bilds der Beobachtungszone durch die erste Bilderfassungsvorrichtung (DCI) und die Projektion des Lichtstrahls durch den Projektor (PR) abzuwechseln.

2. System nach Anspruch 1, das eine zweite Bilderfassungsvorrichtung (DCI2) enthält, die sich hinter der zweiten Anzeigevorrichtung (DA2) befindet.

3. System nach Anspruch 1 oder 2, bei dem die Anzeigevorrichtung (DA1, DA2), hinter der sich eine Bilderfassungsvorrichtung (DCI1, DCI2) befindet, halbdurchsichtig ist.

4. System nach einem der Ansprüche 1 bis 3, bei dem eine der Anzeigevorrichtungen (DA1, DA2) geeignet ist, um mal in einem durchscheinenden Zustand, mal in einem durchsichtigen Zustand zu sein.

5. System nach einem der Ansprüche 1 bis 4, bei dem die Anzeigevorrichtungen (DA1, DA2) lotrechte optische Achsen haben, wobei die zweite Anzeigevorrichtung (DA2) das Hintergrundbild im Hintergrund und die erste Anzeigevorrichtung (DA1) das Luftbild (IA) im Vordergrund durch Reflektion auf dem halbreflektierenden Plättchen (LS) in Richtung der Beobachtungszone anzeigt.

6. System nach einem der Ansprüche 1 bis 5, das eine Einrichtung (RB, VER, SOC, VERL) zum Drehen des halbreflektierenden Plättchens (LS) um zwei lotrechte Drehachsen (Ah, Av) enthält.

7. System nach einem der Ansprüche 1 bis 6, bei dem die Einrichtung zum Wechseln (DCA) eine der Anzeigevorrichtungen (DA1, DA2) in einen undurchsichtigen Zustand und die Projektion des Lichtstrahls vom Projektor auf die eine Anzeigevorrichtung steuert, und die eine Anzeigevorrichtung in einen durchsichtigen Zustand und die Unterdrückung des Lichtstrahls steuert.

8. System nach einem der Ansprüche 1 bis 7, das eine Verschlussvorrichtung (OBT) enthält, die von der Einrichtung zum Wechseln (DCA) gesteuert wird und mindestens einen gelochten Bereich, der von dem vom Projektor (PR) zu einer der ersten und zweiten Anzeigevorrichtungen (DA1, DA2) projizierten Lichtstrahl durchquert wird, um eines der Luft- und Hintergrundbilder anzuzeigen, und mindestens einen massiven Bereich enthält, der den projizierten Lichtstrahl verdeckt, um ein Bild der Beobachtungszone zu erfassen.

9. System nach einem der Ansprüche 1 bis 7, das eine bewegliche Klappe (VM) enthält, die in der Nähe des Projektors (PR) und einer der ersten und zweiten Anzeigevorrichtungen (DA1, DA2) angeordnet ist und von der Einrichtung zum Wechseln (DCA) gesteuert wird, wobei die bewegliche Klappe eine Öffnung, die geeignet ist, um von dem vom Projektor (PR) zur anderen der ersten und zweiten Anzeigevorrichtungen (DA1, DA2) projizierten Lichtstrahl durchquert zu werden, um eines der Luft- und Hintergrundbilder anzuzeigen, und eine reflektierende Fläche enthält, die geeignet ist, um den projizierten Lichtstrahl auf eine der ersten und zweiten Anzeigevorrichtungen (DA1, DA2) zurück zu projizieren, welche geeignet ist, um das andere der Luft- und Hintergrundbilder anzuzeigen.

10. Kommunikationssystem, das zwei optische Systeme nach einem der Ansprüche 1 bis 9 enthält, die in einer lokalen bzw. in einer fernen Szene angeordnet sind, wobei das in einem der optischen Systeme angezeigte Luftbild (IA) dem von der ersten Bilderfassungsvorrichtung (DCI) des anderen der optischen Systeme erfassten Bild entspricht.
